Europäisches Patentamt

European Patent Office

Office européen des brevets

(19)

(11) Veröffentlichungsnummer: **0 257 405**
**B1**

(12) **EUROPÄISCHE PATENTSCHRIFT**

(45) Veröffentlichungstag der Patentschrift:
31.10.90

(21) Anmeldenummer: 87111405.4

(22) Anmeldetag: 06.08.87

(51) Int. Cl.⁵: **G06F 12/08, G06F 11/10**

(54) **Verfahren und Anordnung zum Aktualisieren von Steuerbitkombinationen.**

(30) Priorität: 07.08.86 DE 3626669

(43) Veröffentlichungstag der Anmeldung:
02.03.88 Patentblatt 88/9

(45) Bekanntmachung des Hinweises auf die Patenterteilung:
31.10.90 Patentblatt 90/44

(84) Benannte Vertragsstaaten:
AT BE CH DE FR GB IT LI NL SE

(56) Entgegenhaltungen:
DE-A- 3 431 770
DE-A- 3 433 679
US-A- 4 334 289

IBM TECHNICAL DISCLOSURE BULLETIN, Band 25,
Nr. 4, September 1982, Seiten 1876-1878, New York, US;
J.L. RIVERO: "Method of modeling least recently used
algorithms"

(73) Patentinhaber: Siemens Aktiengesellschaft,
Wittelsbacherplatz 2, D-8000 München 2(DE)

(72) Erfinder: Hankeln, Martin, Dipl.-Ing., Ilmstrasse 3B,
D-8014 Neubiberg(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Verfahren und Anordnung zum Aktualisieren der den einzelnen Informationseinträgen eines Speichers, insbesondere eines als Cachespeicher mit einem Arbeitsspeicher zusammenarbeitenden Pufferspeichers einer Datenverarbeitungsanlage, individuell zugeordneten betriebsabhängigen Steuerbitkombination.

Die Verwendung von Cachesspeichern in Datenverarbeitungsanlagen ist allgemein geläufig - man siehe zum Beispiel Computing Surveys, Vol. 14, No. 3, Sept. 82, Seiten 473 bis 530. Derartige Cachespeicher weisen bekanntlich neben den Bereichen für die eigentlichen Dateneinträge zusätzliche Bereiche für Adressen- und Steuerbiteinträge auf, die die Belegung mit Daten und die Auswahl angeforderter Daten steuern. Die Steuerbiteinträge bestehen meistens aus einzelnen Steuerbits. Diese Steuerbits kennzeichnen zum Beispiel mit einem Bit, ob der zugehörige Dateneintrag ungültig oder gültig ist, mit einem weiteren Bit, ob der zugehörige Dateneintrag ungeändert oder geändert ist und gegebenenfalls mit einem Bit, ob bei mehreren Cachespeichern der zugehörige Dateneintrag nur im eigenen oder auch in weiteren Cachespeichern enthalten ist, während ein letztes Bit als Paritätsbit die jeweilige Konmbination der Steuerbits sichert.

Bei jedem Zugriff zum Cachespeicher wird diese Steuerbitkombination zusammen mit dem zugehörigen Adresseneintrag gelesen und je nach Art des Zugriffs und des sich dabei ergebenden Betriebszustandes geändert. Während eines Prüfzyklus für den Cachespeicher muß also die gelesene Steuerbitkombination auch geändert, das zugehörige Paritätsbit erneuert sowie als Ganzes wieder abgespeichert werden. Die für das Ändern und Rückschreiben benötigte Zeit wird dabei umso kritischer, je größer die Auslesezeit im Vergleich zur angestrebten Zyklusdauer ist, und sie fällt besonders dann ins Gewicht, wenn der Prüfzyklus einen Treffer ergibt und dieser damit beendet werden könnte. Bei Verwendung von eigenständigen Speichermodulen für die Steuerbitkombination mit üblicher bitparalleler Lese- und Schreibsteuerung sind für das Rückschreiben ungeänderter Steuerbits außer dem Auswahlschalter für die Rückkopplung der ungeänderten Steuerbits auf den Schreibeingang erforderlich.

Aufgabe der Erfindung ist es daher, Verfahren und Anordnung der eingangs genannten Art zu schaffen, bei denen der Aufwand für das Aktualisieren der jeweiligen Steuerbitkombination möglichst gering ist und der Zeitbedarf für das Aktualisieren nicht ins Gewicht fällt.

Diese Aufgabe wird beim Verfahren gemäß der Erfindung durch die kennzeichnenden Merkmale des Patentanspruches 1 gelöst.

Die Erfindung nutzt dabei die Tatsache, daß die jeweils neu einzuschreibende Steuerbitkombination allein anhand der auftretenden betriebsbedingten Zustandssignale voll ständig ableitbar ist, wobei zu jeder Kombination von Steuerbits ein vorgegebenes Paritätsbit gehört. Die Steuerbitkombinationen werden also fortlaufend mit den sich ändernden Zustandssignalen erzeugt und stehen daher im Bedarfsfall ohne Verzug für die Einspeicherung zur Verfügung, ohne daß ein Auswahlschalter für die Auswahl zu übernehmender gelesener Steuerbits und Einrichtungen zur Ableitung des jeweiligen Paritätsbits erforderlich sind. Da dabei nicht jede erzeugte Steuerbitkombination einzuspeichern ist, erfolgt die Einspeicherung abhängig von entsprechend ausgewählten Betriebszustandssignalen und damit nur im Bedarfsfall.

Das neue Verfahren ist insbesondere dann von Vorteil, wenn die Anzahl der zulässigen Steuerbitkombinationen von Haus aus gering ist, da damit der an sich schon geringe Aufwand für die Erzeugung der verschiedenen Steuerbitkombinationen sinkt. Weiterbildungen des Verfahrens gemäß der Erfindung ergeben sich aus den Patentansprüchen 2 bis 5.

Eine Schaltungsanordnung gemäß der Erfindung erfordert entsprechend Patentanspruch 8 eine in den Einspeicherungsweg eingefügte logische Verknüpfungseinrichtung zur Ableitung der Steuerbitkombination und eine dem Schreibtakteingang vorgeschaltete Steuerschaltung zur Ableitung des zeitgerechten Schreibtaktes, wobei Weiterbildungen sich aus den Patentansprüchen 7 bis 9 ergeben.

Einzelheiten der Erfindung seien nachfolgend anhand eines in der Zeichnung dargestellten Ausführungsbeispieles näher erläutert.

Im einzelnen zeigen

FIG 1 ein Übersichtsschaltbild eines Cachespeichers mit den durch die Erfindung bedingten Einrichtungen zur Ableitung der Steuerbitkombinationen und der Schreibtaktsignale,

FIG 2 eine Zusammenstellung der jeweils ableitbaren Steuerbitkombinationen in Zuordnung zu von den betriebsbedingten Zustandssignalen ableitbaren individuellen Zugriffssignalen,

FIG 3 ein Blockschaltbild der Verknüpfungseinrichtung von FIG 1 zur Ableitung der Steuerbitkombinationen gemäß FIG 2,

FIG 4 ein Blockschaltbild der Steuerschaltung von FIG 1 zur Ableitung der Schreibtaktsignale und

FIG 5 eine weitere Zusammenstellung von jeweils ableitbaren Steuerbitkombinationen für einen weiteren Anwendungsfall.

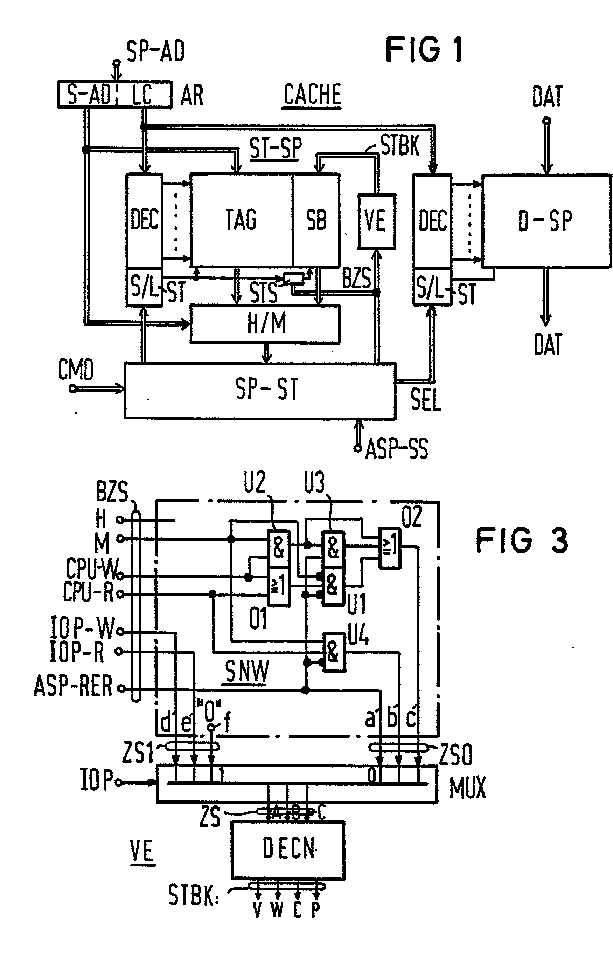

Das Übersichtsschaltbild von FIG 1 zeigt den prinzipiellen Aufbau eines Cachespeichers in Anlehnung an die DE-PS 30 12 205 oder die Europäische Patentanmeldung 0072179. Der Cachespeicher besteht dementsprechend aus einem Datenspeicherteil D-SP und einem Steuerspeicherteil ST-SP.

Der Datenspeicherteil DSP weist in der Regel zwei oder mehrere Speichersätze oder -bänke mit jeweils einer Vielzahl von Speicherbereichen auf, die in bekannter Weise über einen Auswahlschalter oder Decoder DEC auswählbar sind, wobei die zugehörige Schreib-/Lesesteuerung S/L-ST entscheidet, welche der Speicherbänke mit einem Schreib- oder Leseimpuls anzusteuern ist, damit nur einer der durch den Decoder DEC gleichzeitig ausgewählten Speicherbereiche Daten DAT liefern oder aufnehmen kann. Im vorliegenden Fall ist nur eine der möglichen Speicherbänke gezeigt.

Der Steuerspeicherteil ST-SP ist ähnlich aufgebaut. Entsprechend den Speicherbänken für die Daten im Datenspeicherteil D-SP weist er mehrere Speicherbänke TAG/SB für die Adressen und die zugehörigen Steuerbits auf, von denen ebenfalls nur eine Speicherbank gezeigt ist. Die Adressen und die Steuerbitkombinationen sind - wie angedeutet - zweckmäßig in getrennten Speichermodulen gespeichert.

Nicht gezeigt ist dabei eine weitere gemeinsame Speicherbank im Steuerspeicherteil ST-SP für Angaben zur Kennzeichnung der Ersetzungsreihenfolge, da diese Angaben nur dann benötigt werden, wenn angeforderte Daten erst aus dem Arbeitsspeicher geholt werden müssen, so daß die bei jedem Zugriff zum Cachespeicher erforderliche Anpassung verzögert vorgenommen werden kann.

Der Zugriff zum Cachespeicher erfolgt in an sich bekannter Weise anhand der zugeführten und im Adressenregister AR zwischengespeicherten Speicheradresse SP-AD, die sich aus einer Teiladresse LC für die Auswahl der Speicherbereiche durch den Decoder DEC und einer Teiladresse S-AD zur Überprüfung der in den Speicherbänken TAG/SB enthaltenen Adressen durch die Steuereinrichtung H/M zusammensetzt, in Verbindung mit einem der übergeordneten Speichersteuerung SP-ST zugeführten Befehl CMD.

Bei jedem Speicherzugriff wird zunächst anhand des Steuerspeicherteils ST-SP überprüft, ob die Teiladresse S-AD in einem der durch die Teiladressen LC ausgewählten Speicherbereiche enthalten ist und ob der zugehörige Dateneintrag im Datenspeicherteil D-SP gültig ist. Liegt ein gültiger Eintrag vor, wird dies mit einem Treffersignal und der zugehörigen Bankkennzeichnung der Speichersteuerung SP-ST mitgeteilt. Anhand der Bankkennzeichnung wird dann über die Schreib-/Lesesteuerung S/L-ST des Datenspeicherteiles D-SP der durch die Teiladresse LC gekennzeichnete Speicherbereich in der ausgewählten Bank für das Auslesen der darin enthaltenen Daten oder aber für die Eingabe von Daten wirksam geschaltet.

Ergibt die Überprüfung der Adressenteile im Steuerspeicherteil ST-SP, daß kein entsprechender Dateneintrag vorliegt oder der gefundene Eintrag ungültig ist, dann muß in an sich bekannter Weise zum nachgeschalteten, nicht gezeigten Arbeitsspeicher zugegriffen werden, aus dem die benötigten Daten dann in den Cachespeicher übernommen werden.

Werden Daten nur im Cachespeicher, nicht aber gleichzeitig im Arbeitsspeicher geändert und werden die geänderten Daten nur in den Arbeitsspeicher übertragen, wenn der zugehörige Speicherbereich im Cachespeicher für andere Daten benötigt wird ("copy-back-Verfahren"), dann muß im Falle des Nachladens aus dem Arbeitsspeicher ein durch die Ersetzungssteuerung ausgewählter gültiger und als geändert markierter Dateneintrag erst in den Arbeitsspeicher ausgelagert werden.

Abweichend von den bekannten Lösungen ist der Ausgang des Speichermoduls für die Steuerbits SB im Steuer speicherteil ST-SP nicht auf den Schreibeingang über einen Auswahlschalter zurückgeführt, und außerdem ist mit diesem Schreibeingang kein gesonderter Paritätsbitgenerator gekoppelt, der aus der einzuschreibenden Kombination von Steuerbits erst das zugehörige Paritätsbit ermittelt. Stattdessen ist der Schreibeingang mit einer Verknüpfungseinrichtung VE verbunden, die abhängig von den anfallenden betriebsbedingten Zustandssignalen BZS die jeweilige Steuerbitkombination STBK einschließlich Paritätsbit liefert, wobei eine weitere Steuerschaltung STS am Schreibtakteingang den Einschreibtakt nach Bedarf liefert.

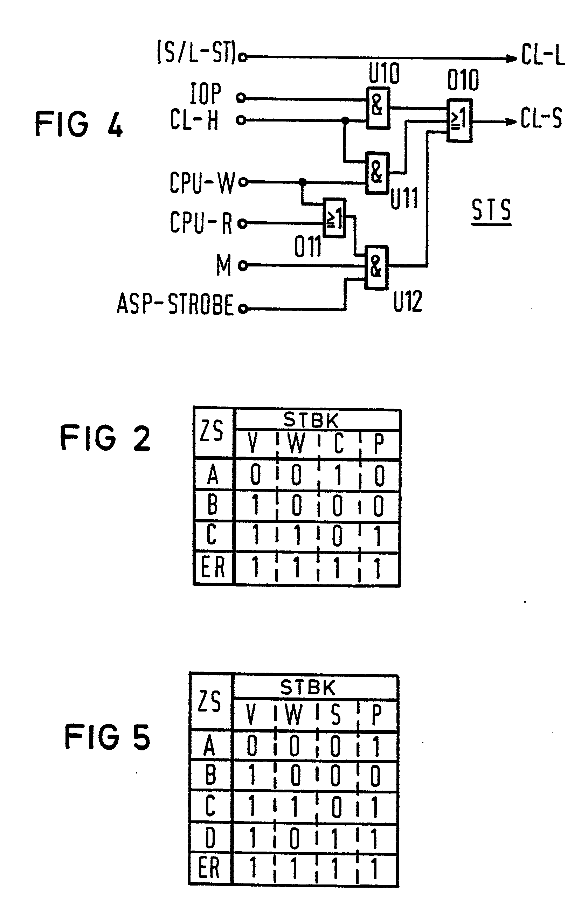

FIG 2 zeigt eine Zusammenstellung der jeweils ableitbaren Steuerbitkombination STBK, die aus drei Steuerbits V, W und C sowie dem Paritätsbit P besteht.

Das Bit V kennzeichnet im gesetzten Zustand einen gültigen Eintrag, wobei Bit C als Kontrollbit dem invertierten Bit V entspricht. Das Bit W zeigt im gesetzten Zustand an, daß die zugehörigen Daten im Cachespeicher geändert sind. Insgesamt sind daher nur drei Speicherungszustände zulässig:

A: Der Eintrag im Cachespeicher ist ungültig. Beim Zugriff zu diesem Eintrag wird daher im Prüfzyklus kein Treffer ermittelt, und es muß zum Arbeitsspeicher zugegriffen werden.

B: Der Eintrag ist gültig und unverändert, d.h. der entsprechende Eintrag ist auch im Arbeitsspeicher vorhanden.

C: Der Eintrag ist gültig und geändert, d.h. der entsprechende Eintrag ist im Arbeitsspeicher nicht mehr vorhanden, so daß beim Ersetzen des Eintrags im Cachespeicher der vorhandene geänderte Eintrag erst in den Arbeitsspeicher ausgelagert werden muß.

Die vierte, mit ER bezeichnete Steuerbitkombination kennzeichnet dagegen einen durch einen Fehler ausgelösten Speicherungszustand.

Eine entsprechend arbeitende Verknüpfungseinrichtung VE ist in FIG 3 gezeigt. Sie besteht im wesentlichen aus einem Schaltnetzwerk SNW, einem Auswahlschalter MUX und einem Decodiernetzwerk DECN.

Das Schaltnetzwerk SNW ermittelt aus den anfallenden betriebsbedingten Zustandssignalen BZS die die einzelnen Steuerbitkombinationen STBK aktivierenden Zugriffsignale ZS..., wobei jeder einen zulässigen Speicherungszustand anzeigenden Steuerbitkombination STBK ein individuelles Zugriffsignal ZS-A, ZS-B oder ZS-C entsprechend FIG 2 zugeordnet ist, während die den fehlerhaften Speicherungszustand ER anzeigende Steuerbitkombination STBK bei gleichzeitigem Wirksamwerden von mehr als einem Zugriffsignal ausgelöst wird.

Im vorliegenden Falle können vom Schaltnetzwerk SNW zwei Gruppen von Zugriffsignalen ZS0 bzw. ZS1 gebildet werden, von denen der Auswahlschalter MUX jeweils eine Gruppe auswählt. Dies ist davon abhängig, ob der Zugriff von der Verarbeitungseinheit CPU oder von der Ein-/Ausgabeeinheit IOP aus durchgeführt wird. Beim Zugriff durch die Ein-/Ausgabeeinheit IOP wird nämlich in der Regel immer der Arbeitsspeicher angesteuert, während im Cachespeicher nur die Steuerbits entsprechend geändert werden. Entsprechend ergeben sich zwei betriebsbedingte Globalzustände mit unterschiedlicher Ableitung der Zugriffsignale für die Gruppe ZS0 beim Zugriff durch die Verarbeitungseinheit CPU und die Gruppe ZS1 beim Zugriff durch die Ein-/Ausgabeeinheit IOP, wobei gleichzeitig der Auswahlschalter MUX umgesteuert wird.

Vier betriebsbedingte Zustandssignale BZS signalisieren entsprechend die Quelle, nämlich CPU oder IOP, des Zugriffs und die jeweilige Zugriffsart Schreiben W oder Lesen R. Zwei weitere Zustandssignale signalisieren das Ergebnis der Prüfung des Cachespeichers durch die Steuerung H/M in FIG 1, und zwar als Treffer- oder HIT-Signal H, wenn ein gültiger Eintrag im Cachespeicher vorliegt, oder als Nichttreffer- oder MISS-Signal M, wenn kein gültiger Eintrag vorliegt und daher auf den Arbeitsspeicher zurückgegriffen werden muß. Werden dabei Daten aus dem Arbeitsspeicher mit einem Fehler behaftet gelesen, so wird dies schließlich mit dem Signal ASP-R.ER signalisiert.

Entsprechend führen Zugriffe durch die Ein-/Ausgabeeinheit IOP bei einem Schreibzugriff mit IOP-W immer zum Zugriffsignal ZS-A für einen ungültigen Eintrag und bei einem Lesezugriff mit IOP-R immer zum Zugriffsignal ZS-B für einen gültigen ungeänderten Eintrag, wobei in beiden Fällen die zugehörige Steuerbitkombination STBK aber nur bei einem Treffersignal H abgespeichert wird. Das Zugriffsignal ZS-C für einen gültigen, aber geänderten Eintrag ist voraussetzungsgemäß nicht möglich. Der entsprechende Anschluß f im Schaltnetzwerk SNW ist daher mit einem logisch "O" entsprechenden Potential beaufschlagt.

Zugriffe durch die Verarbeitungseinheit CPU führen zunächst unabhängig von der Art des Zugriffs über das ODER-Glied 01, das UND-Glied U1 und das ODER-Glied 02 immer zur Erzeugung des Zugriffsignals ZS-C für einen gültigen geänderten Eintrag, solange kein MISS-Signal M angezeigt wird. Dieses Zugriffsignal wird bei einem Schreibzugriff und gleichzeitigem MISS-Signal M über das UND-Glied U2 und das ODER-Glied 02 bzw. über das UND-Glied U3 bei zusätzlichem Lesefehlersignal ASP-R.ER aufrecht erhalten, führt aber im letzteren Fall in Verbindung mit dem gleichzeitig auftretenden Zugriffsignal ZS-A zur Fehlerkombination ER von FIG 2. Die jeweils bereitgestellte Steuerbitkombination STBK wird bei einem Hit-Signal H direkt abgespeichert, bei einem MISS-Signal M aber erst, wenn die benötigten Daten aus dem Arbeitsspeicher zur Einspeicherung in dem Cachespeicher bereitstehen.

Bei einem Lesezugriff mit CPU-R führt ein HIT-Signal H zu keiner Änderung der gespeicherten Steuerbitkombination, während ein MISS-Signal M über das UND-Glied U4 zum Zugriffsignal ZS-B für einen gültigen ungeänderten Eintrag führt, solange mit dem Signal ASP-R.ER kein Fehler signalisiert wird, was zur Umsteuerung auf das Zugriffsignal ZS-A für einen ungültigen Eintrag führt. Auch in diesem Falle wird die jeweilige Steuerbitkombination erst abgespeichert, wenn die Daten aus dem Arbeitsspeicher für die Übernahme in den Cachespeicher bereitstehen.

Der zeitkritische Fall ist also gegeben, wenn bei einem Zugriff durch die Verarbeitungseinheit CPU infolge des HIT-Signals H die einen gültigen Eintrag kennzeichnende gespeicherte Steuerbitkombination in die einen gültigen geänderten Eintrag kennzeichnende Steuerbitkombination abzuändern ist. In diesem Falle wird die zuletzt genannte Steuerbitkombination bereits vorsorglich mit jeder Anforderung der Verarbeitungseinheit erzeugt, so daß bei einem Schreibzugriff mit dem Hit-Signal H sofort eingespeichert werden kann, ohne daß Verzugszeiten durch Auswahl unveränderter Steuerbits und durch Erzeugung eines entsprechenden Paritätsbits auftreten.

FIG. 4 zeigt die entsprechend arbeitende Steuerschaltung STS für die Ableitung der jeweils benötigten Schreibtakte CL-S, während die von der Schreib-/Lesesteuerung S/L-ST gelieferten Lesetakte CL-L unbeeinflußt bleiben. Mit einem vom Treffersignal H jeweils abgeleiteten Takt CL-H wird bei jedem Zugriff von der Ein-/Ausgabeeinheit IOP und bei jedem Schreibzugriff durch die Verarbeitungseinheit CPU über das UND-Glied U10 bzw. U11 sowie das ODER-Glied 010 unmittelbar ein Schreibtakt CL-S ausgelöst.

Liegt dagegen ein Nichttreffersignal M vor, erfolgt die Auslösung des Schreibtaktes CL-S verzögert und abhängig von dem die Daten aus dem Arbeitsspeicher begleitenden Übertragungstaktsignal ASP-STROBE anhand des UND-Gliedes U12, wobei mit dem ODER-Glied 011 nur Zugriffe der Verarbeitungseinheit CPU berücksichtigt werden.

Das der Erfindung zugrunde liegende Steuerungsprinzip ist ohne weiteres auch in Datenverarbeitungsanlagen anwendbar, bei denen der Arbeitsspeicher mit mehreren Cachespeichern zusammenarbeitet. FIG 5 zeigt dafür in Anlehnung an FIG 2 die dann möglichen Steuerbitkombinationen STBK, die ebenfalls drei Steuerbits umfassen, wobei jedoch das Steuerbit C von FIG 2 durch das Steuerbit S ersetzt ist, das im gesetzten Zustand anzeigt, daß der zugehörige Eintrag auch in weiteren Cachespeichern vorhanden ist. Damit ergibt sich neben den Steuerbitkombinationen von FIG 2 lediglich eine weitere Kombination D, da allgemein ein gültiger geänderter Eintrag nur vorliegen kann, wenn die Daten nicht gleichzeitig in mehreren Cachespeichern enthalten sind. Die Verknüpfungseinrichtung VE von FIG 3 und die Steuerschaltung STS von FIG 4 wären dann entsprechend abzuwandeln bzw. zu ergänzen, was sich ohne Schwierigkeiten aus dem dann gültigen Betriebsablauf ergibt.

Das Decodiernetzwerk DECN in FIG 3 kann in an sich bekannter Weise aus einem aus logischen Verknüpfungselementen aufgebauten Netzwerk oder aber aus einem codiert adressierbaren Speicherbaustein bestehen, der entsprechend der durch die Zugriffsignale gebildeten Adressen angesteuert wird und jeweils die gespeichert vorliegende Steuerbitkombination STBK unmittelbar liefert.

**Patentansprüche**

1. Verfahren zum Aktualisieren der den einzelnen Informationseinträgen eines Speichers, insbesondere eines als Cachespeicher mit einem Arbeitsspeicher zusammenarbeitenden Pufferspeicher einer Datenverarbeitungsanlage, individuell zugeordneten betriebsabhängigen Steuerbitkombination, die durch ein eigenständiges Paritätsbit gesichert ist, wobei die Steuerbitkombinationen in einem eigenständigen Speichermodul mit bitparalleler Lese- und Schreibsteuerung gespeichert werden, dadurch gekennzeichnet, daß abhängig von den nacheinander auftretenden Betriebszuständen die Steuerbitkombinationen (STBK) einschließlich des Paritätsbits (P) anhand der jeweils vorliegenden betriebsbedingten Zustandssignale (BZS) fortlaufend insgesamt neu gebildet und abhängig von ausgewählten Betriebszustandssignalen (BZS) in den zugehörigen Speicherabschnitt eingeschrieben werden, ohne daß dabei unveränderte Bits der bei jeder Ansteuerung des zugehörigen Informtionseintrages jeweils gelesenen Steuerbitkombination übernommen werden und das Paritätsbit (P) der einzuschreibenden neuen Steuerbitkombination jeweils erst ermittelt wird.

2. Verfahren nach Anspruch 1, dadurch gekennzeichnet, daß die einen zulässigen Speicherungszustand anzeigenden Steuerbitkombinationen (STBK) jeweils durch ein individuelles Zugriffsignal (ZS-A bis ZS-C) aktiviert werden, das von den auftretenden betriebsbedingten Zustandssignalen (BZS) abgeleitet wird.

3. Verfahren nach Anspruch 2, dadurch gekennzeichnet, daß bei mehreren betriebsbedingten Globalzuständen abhängig von den je Globalzustand wirksam werdenden Zustandssignalen (BZS) je Globalzustand eine Gruppe von Zugriffsignalen (ZS0 bzw. ZS1) gebildet wird und die jeweils zuständige Gruppe ausgewählt wird.

4. Verfahren nach Anspruch 2 oder 3, dadurch gekennzeichnet, daß bei gleichzeitigem Wirksamwerden von mehr als einem der Zugriffsignale (z.B. ZS-A und ZS-C) eine einen unzulässigen Speicherungszustand (ER) anzeigende Steuerbitkombination aktiviert wird.

5. Verfahren nach den Ansprüchen 1 bis 4, wobei die Steuerbitkombination (STBK) jeweils aus einem Gültigkeitsbit (V), einem Bit (W) zur Kennzeichnung der Änderung der Daten im zugehörigen Eintrag und einem Bit (C bzw. S) zur zusätzlichen Kontrolle bzw. zur Kennzeichnung der gleichzeitigen Speicherung der Daten des Eintrags in wenigstens einem weiteren Cachespeicher besteht und diese Steuerbits durch ein individuelles Paritätsbit (P) gesichert sind und wobei Zugriffe zum aus Cachespeicher und Arbeitsspeicher bestehenden Speichersystem sowohl von der Verarbeitungseinheit (CPU) als auch von der Ein-/Ausgabeeinheit (IOP) der Datenverarbeitungsanlage ausgelöst werden können und Zugriffe von der Ein-/Ausgabeeinheit (IOP) immer an den nachgeschalteten Arbeitsspeicher weitergeleitet werden, dadurch gekennzeichnet, daß insgesamt drei bzw. vier einen zulässigen Speicherungszustand anzeigende Steuerbitkombinationen und eine einen unzulässigen Speicherungszustand anzeigende Steuerbitkombination gebildet werden, daß aus den auftretenden betriebsabhängigen Zustandssignalen (BZS) abhängig vom Zugriff durch die Verarbeitungseinheit (CPU) bzw. die Ein-/Ausgabeeinheit (IOP) zwei Gruppen von Zugriffsignalen (ZS0 und ZS1) abgeleitet werden, daß bei einem Zugriff durch die Ein-/Ausgabeeinheit (IOP) die aktivierte Steuerbitkombination (STBK) abgespeichert wird, sobald die Überprüfung des Cachespeichers zu einem Treffersignal (H) führt, und daß bei einem Zugriff durch die Verarbeitungseinheit (CPU) die aktivierte Steuerbitkombination (STBK) abgespeichert wird, sobald bei einem Schreibzugriff (CPU-W) die Überprüfung des Cachespeichers zu einem Treffersignal (H) führt, während bei negativer Überprüfung (Signal M) des Cachespeichers unabhängig von der Art des Zugriffs die Abspeicherung erst mit Einschreiben (Signal ASP-STROBE) der aus dem Arbeitsspeicher gelesenen zugehörigen Informtionen (DAT) erfolgt.

6. Schaltungsanordnung, zum Aktualisieren der den einzelnen Informationseinträgern eines Speichers, insbesndere eines als Cachespeicher mit einem Arbeitsspeicher zusammenarbeitenden Pufferspeicher einer Datenverarbeitungsanlage, individuell zugeordneten betriebsabhängigen Steuerbitkombination, die durch ein eigenständiges Paritätsbit gesichert ist, wobei die Steuerbitkombination ein einem eigenständigen Speichermodul mit bitparallelen Lese- und Schreibsteuerung gespeichert werden, gekennzeichnet durch ein in den Einspeicherweg des die Steuerbitkombinationen (STBK) einschließlich des Paritätsbits (P) aufnehmenden Speichermoduls eingefügte logische Verknüpfungseinrichtung (VE) zur eigenständigen Bildung der jeweils benötigten Steuerbitkombination (STBK) aus den jeweils vorliegenden betriebsabhängigen Zustandssignalen (BZS) und durch eine dem Schreibtakteingang des Speichermoduls vorgeschaltete Steuerschaltung (STS) zur Ableitung des Schreibtaktes (CL-S) abhängig von ausgewählten Betriebszustandssignalen (BZS.)

7. Schaltungsanordnung nach Anspruch 6 zur Durchführung der Verfahren nach einem der Ansprüche 2 bis 5, dadurch gekennzeichnet, daß die Verknüpfungseinrichtung (VE) aus einem die Zugriffsignale (ZS...) bildenden Schaltungsnetzwerk (SNW) und einem durch die Zugriffsignale (ZS...) ansteuerbaren Decodiernetzwerk (DECN) besteht, das die jeweilige Steuerbitkombination (STBK) liefert.

8. schaltungsnordnung nach Anspruch 7, dadurch gekennzeichnet, daß das Decodiernetzwerk (DECN) aus einem codiert adressierbaren Speicherbaustein besteht, der die jeder möglichen Ansteueradresse entsprechende Steuerbitkombination (STBK) gespeichert enthält und bei Adressierung am Ausgang zur Verfügung stellt.

9. Schaltungsanordnung nach Anspruch 7 oder 8, dadurch gekennzeichet, daß zwischen dem Schaltungsnetzwerk (SNW) und dem Decodiernetzwerk (DECN) ein Auswahlschalter (MUX) vorgesehen ist, durch den bei mehreren betriebsbedingten Globalzuständen (Zugriff durch CPU bzw. IOP) die jeweilige Gruppe von Zugriffsignalen (ZS0 bzw. ZS1)

zum Decodiernetzwerk (DECN) durchschaltbar ist.

## Revendications

1. Procédé pour actualiser la combinaison des bits de commande, qui dépend du fonctionnement et est associée individuellement aux différentes entrées d'informations d'une mémoire, notamment d'une mémoire tampon d'une installation de traitement de données, coopérant avec une mémoire de travail, et est protégée par un bit de parité indépendant, les combinaisons des bits de commande dans un module de mémoire indépendant étant mémorisées au moyen d'une commande de lecture et d'enregistrement en parallèle au niveau des bits, caractérisé par le fait qu'en fonction des états de fonctionnement qui apparaissent successivement, les combinaisons (STBK) de bits de commande, y compris le bit de parité (P), sont à nouveau globalement formées en permanence sur la base des signaux d'état (BZS) respectivement présents et conditionnés par le fonctionnement, et sont mémorisées dans la section de mémoire associée en fonction de signaux sélectionnés d'état de fonctionnement (BZS), sans que des bits inchangés de la combinaison de bits de commande lue respectivement lors de chaque commande de l'entrée associée d'informations soient pris en charge et sans que le bit de parité (P) de la nouvelle combinaison de bits de commande, devant être enregistrée, soit respectivement déterminé au préalable.

2. Procédé suivant la revendication 1, caractérisé par le fait que les combinaisons de bits de commande (STBK), qui indiquent un état admissible de mémorisation, sont activées respectivement par un signal individuel d'accès (ZS-A à ZS-C), qui est dérivé des signaux d'état (BZS) qui apparaissent et sont conditionnés par le fonctionnement.

3. Procédé suivant la revendication 2, caractérisé par le fait que, dans le cas de plusieurs états globaux conditionnés par le fonctionnement, un groupe de signaux d'accès (ZS0 ou ZS1) est formé en fonction des signaux d'état (BZS) qui deviennent actifs pour chaque état global, et que le groupe respectivement associé est sélectionné.

4. Procédé suivant la revendication 2 ou 3, caractérisé par le fait que dans le cas où plus d'un des signaux d'accès (par exemple ZS-A et ZS-C) devient simultanément actif, une combinaison de bits de commande, qui indique un état inadmissible de mémorisation (ER), est activée.

5. Procédé suivant les revendications 1 à 4, selon lequel la combinaison de bits de commande (STBK) est constituée respectivement par un bit de validité (V), un bit (W) servant à caractériser la modification des données dans l'entrée associée et un bit (C ou S) servant á réaliser la commande supplémentaire ou la caractérisation de la mémorisation simultanée des données de l'entrée dans au moins une autre antémémoire, et ces bits de commande sont protégés par un bit individuel de parité (P), et selon lequel des accès au système de mémoire constitué par l'antémémoire et la mémoire de travail peuvent être déclenchés aussi bien par l'unité de traitement (CPU) que par l'unité d'entrée/sortie (IOP) de l'installation de traitement de données et que des accès peuvent être retransmis en permanence dans l'unité d'entrée/sortie (IOP) à la mémoire de travail branchée en aval, caractérisé par le fait que trois ou quatre combinaisons de bits de commande indiquant un état admissible de mémorisation et une combinaison de bits de commande indiquant un état inadmissible de mémorisation sont globalement formées, que deux groupes de signaux d'accès (ZS0 et ZS1) sont dérivés des signaux d'état (BZS), qui apparaissent et dépendent du fonctionnement, en fonction de l'accès effectué par l'unité de traitement (CPU) ou par l'unité d'entrée/sortie (IOP), que lors d'un accès effectué par l'unité d'entrée/sortie (IOP), la combinaison de bits de commande activée (STBK) est mémorisée dès que le contrôle de l'antémémoire conduit à un signal de coup au but (H) et que dans le cas d'un accès effectué par l'unité de traitement (CPU), la combinaison de bits de commande activée (STBK) est mémorisée dès que, lors d'un accès d'enregistrement (CPU-W), le contrôle de l'antémémoire conduit à un signal de coup au but (H), alors que dans le cas d'un contrôle négatif (signal M) de l'antémémoire, la mémorisation est exécutée, indépendamment du type de l'accès, uniquement lors de l'enregistrement (signal ASP-STROBE) des informations associées (DAT) lues à partir de la mémoire de travail.

6. Montage pour actualiser la combinaison des bits de commande, qui dépend du fonctionnement, et associée individuellement aux différentes entrées d'informations d'une mémoire, notamment d'une mémoire tampon d'une installation de traitement de données, coopérant avec une mémoire de travail, en tant qu'antémémoire, et est protégée par un bit de parité indépendant, les combinaisons des bits de commande dans un module de mémoire indépendant étant mémorisées au moyen d'une commande de lecture et d'enregistrement en parallèle au niveau des bits, caractérisé par un dispositif combinatoire logique (VE), inséré dans le trajet de mémorisation du module de mémoire recevant les combinaisons de bits de commande (STBK), y compris les bits de parité (P), et servant à former de façon indépendante la combinaison respectivement nécessaire de bits de commande (STBK) à partir des signaux d'état (BZS), qui sont respectivement présents et qui dépendent du fonctionnement, et par un circuit de commande (STS) branché en amont de l'entrée de la cadence d'enregistrement du module de mémoire et servant á dériver la cadence d'enregistrement (CL-S) en fonction de signaux, sélectionnés d'état do fonctionnement (BZS).

7. Montage suivant la revendication 6 pour la mise en oeuvre du procédé suivant l'une des revendications 2 à 5, caractérisé par le fait que le dispositif combinatoire (VE) est constitué par un réseau de commutation (SNW) formant les signaux d'accès (ZS...) et par un réseau de décodage (DECN), qui peut être commandé par les signaux d'accès (ZS...) et fournit la combinaison respective de bits de commande (STBK).

8. Montage suivant la revendication 7, caractérisé par le fait que le réseau de décodage (DECN) est constitué par un module de mémoire adressable d'une manière codée, dans lequel est mémorisée la combinaison de bits de commande (STBK) qui correspond à chaque adresse de commande possible et est disponible à la sortie, lors d'un adressage.

9. Montage suivant la revendication 7 ou 8, caractérisé par le fait qu'entre le réseau de circuit (SNW) et le réseau de décodage (DECN), il est prévu un commutateur de sélection (MUX), à l'aide duquel, dans le cas de plusieurs états globaux conditionnés par le fonctionnement (accès par le CPU ou IOP), le groupe respectif de signaux d'accès (ZS0 ou ZS1) peut être transmis directement au réseau de décodage (DECN).

**Claims**

1. Method of updating the operationally dependent control bit combination assigned individually to the individual information entries of a memory, in particular of a buffer memory of a data processing system working as a cache memory together with a main memory, which combination is secured by an independent parity bit, the control bit combinations being stored in an independent memory module with bit-parallel read and write control, characterized in that, depending on the successively occurring operating states, the control bit combinations (STBK), including the parity bit (P), are continually reformed as a whole on the basis of the respectively present operationally dictated state signals (BZS) and, depending on selected operating state signals (BZS), are written into the associated memory section without at the same time unchanged bits of the control bit combination read in each case upon each activation of the associated information entry being taken over and the parity bit (P) of the new control bit combination to be witten-in in each case first of all being determined.

2. Method according to Claim 1, characterized in that the control bit combinations (STBK) indicating a permissible storage state are in each case activated by an individual access signal (ZS-A to ZS-C), which is derived from the operationally dictated state signals (BZS) occurring.

3. Method according to Claim 2, characterized in that, in the case of a plurality of operationally dictated global states, depending on the state signals (BZS) coming into effect per global state, a group of access signals (ZS0 or ZS1) is formed per global state and the respectively applicable group is selected.

4. Method according to Claim 2 or 3, characterized in that, in the event of more than one of the access signals (e.g. ZS-A and ZS-C, becoming active simultaneously, a control bit combination indicating an impermissible storage state (ER) is activated.

5. Method according to Claims 1 to 4, the control bit combination (STBK) in each case consisting of a validity bit (V), a bit (W) for marking the change of the data in the associated entry and a bit (C or S) for additional checking or for marking the simultaneous storage of data of the entry in at least one further cache memory and these control bits being secured by an individual parity bit (P) and accesses to the memory system consisting of cache memory and main memory being capable of being initiated both by the central processing unit (CPU) and by the input/output unit (IOP) of the data processing system and accesses by the input/output unit (IOP) always being passed on to the downstream main memory, characterized in that altogether three or four control bit combinations indicating a permissible storage state and one control bit combination indicating an impermissible storage state are formed, in that, depending on the access by the central processing unit (CPU) or the input/output unit (IOP), two groups of access signals (ZS0 and ZS1) are derived from the operationally dependent state signals (BZS) occurring, in that, in the case of an access by the input/output unit (IOP), the activated control bit combination (STBK) is stored as soon as the checking of the cache memory results in a hit signal (H), and in that, in the case of an access by the central processing unit (CPU), the activated control bit combination (STBK) is stored as soon as the checking of the cache memory in a write access (CPU-W) results in a hit signal (H), whereas, irrespective of the type of access, in the case of negative checking (signal M) of the cache memory the storage does not take place until writing-in (signal ASP-STROBE) of the associated information (DAT) read from the main memory.

6. Circuit arrangement for updating the operationally dependent control bit combination assigned individually to the individual information entries of a memory, in particular of a buffer memory of a data processing system working as a cache memory together with a main memory, which combination is secured by an independent parity bit, the control bit combinations being stored in an independent memory module with bit-parallel read and write control, characterized by a logical connection element (VE), inserted into the storing channel of the memory module receiving the control bit combinations (STBK), including the parity bits (P), for independent formation of the respectively required control bit combination (STBK) from the respectively present operationally dependent state signals (BZS), and by a control circuit (STS), arranged upstream of the write clock input of the memory module, for deriving the write clock (CLS) dependently of selected operating state signals (BZS).

7. Circuit arrangement according to Claim 6 for carrying out the methods according to one of Claims 2 to 5, characterized in that the connection element (VE) consists of a switching network (SNW), forming the access signals (ZS...), and a decoder network (DECN), which can be activated by the access signals (ZS...) and supplies the respective control bit combination (STBK).

8. Circuit arrangement according to Claim 7, characterized in that the decoder network (DECN) consists of a memory module which can be addressed in coded form, contains stored in it the control bit combination (STBK) corresponding to every possible activation address and, in addressing, makes the said combination available at the output.

9. Circuit arrangement according to Claim 7 or 8, characterized in that a selection switch (MUX) is provided between the switching network (SNW) and the decoder network (DECN), by which switch, in the case of a plurality of operationally dictated global states (access by CPU or IOP), the respective group of access signals (ZS0 or ZS1) can be switched through to the decoder network (DECN).

FIG 1

FIG 3

**FIG 4**

| ZS | STBK | | | |
|----|---|---|---|---|
| | V | W | C | P |
| A | 0 | 0 | 1 | 0 |
| B | 1 | 0 | 0 | 0 |
| C | 1 | 1 | 0 | 1 |
| ER | 1 | 1 | 1 | 1 |

**FIG 2**

| ZS | STBK | | | |
|----|---|---|---|---|
| | V | W | S | P |
| A | 0 | 0 | 0 | 1 |
| B | 1 | 0 | 0 | 0 |
| C | 1 | 1 | 0 | 1 |
| D | 1 | 0 | 1 | 1 |
| ER | 1 | 1 | 1 | 1 |

**FIG 5**